# EUROPEAN PATENT APPLICATION

(11) **EP 1 185 056 A2**
(43) Date of publication of application: **06.03.2002**
(21) Application number: 00311564.9
(22) Date of filing: 21.12.2000
(51) Int. Cl.: H04L 29/12, H04L 29/06, H04L 29/08

(54) **Wireless internet shortcut connection method using numerical combination and wireless internet connection method using shortcut buttons**

(30) Priority: 02.09.2000 KR 2000051884; 05.09.2000 KR 2000052533; 27.10.2000 KR 2000063605
(71) Applicant: InfoBank Corporation, Seoul 135-784 (KR)
(72) Inventor: Jang, Jun-Ho, Songnam-city, Gyunggi-do 463-500 (KR); Song, Young-Han, Gunpo-city, Gyunggi-do 435-040 (KR)
(74) Representative: Read, Matthew Charles

(57) **Abstract**

A wireless Internet connection method using combination of numbers is provided, in which the method includes the steps of converting a numerical combination made of at least one number into an Internet site URL (Universal Resources Locator), matching a combination of at least one number with an Internet site URL to form a database, receiving the numerical combination from a user terminal, searching a URL matching with the received numerical combination, and connecting the user terminal with an Internet site having the URL. The wireless Internet connection method solves the problems that it is difficult for a user to access a wireless Internet directly, and that it is difficult for a wireless Internet site administrator to secure an easily recognizable URL, in which the user accesses a wireless Internet using a telephone number of a wireless Internet site administrator, and a connection method can be performed straightly using a shortcut dialing function possessed in a conventional terminal.

## Description

### BACKGROUND OF THE INVENTION

### 1. Field of the Invention

The present invention relates to a wireless Internet connection method, and more particularly, to a wireless Internet connection method using a telephone number, in which a wireless Internet site administrator requests a telephone number wireless Internet connection service with his or her own telephone number, and a terminal user inputs a telephone number of the wireless Internet site administrator to be accessed to a corresponding wireless Internet site.

### 2. Description of the Related Art

Wireless Internet means that a user uses Internet services such as web, e-mail, and chatting after accessing the Internet using a wireless device such as a portable communications terminal. At present, there is a WAP (Wireless Application Protocol) as a standardized specification of the wireless Internet connection.

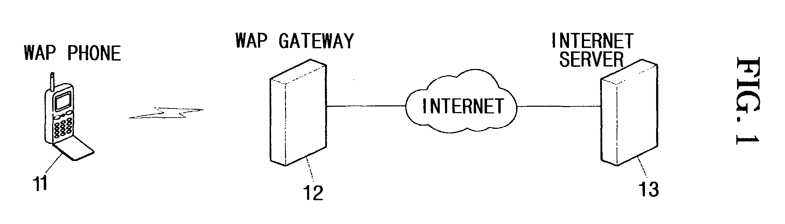

FIG. 1 shows a schematic network of a general wireless Internet using WAP.

As shown in FIG. 1, a wireless Internet service is divided into a portion performed between a user terminal 11 and a WAP gateway 12 and a portion performed between the WAP gateway 12 and an Internet server 13 providing various Internet-related services such as a contents providing service.

The portion existing between the user terminal 11 and the WAP gateway 12 is a wireless network according to the WAP, and the portion existing between the WAP gateway 12 and the Internet server 13 is a wireless network following the HTTP (HyperText Transfer Protocol). Recently, most mobile telecommunications company provides services enabling a wireless Internet connection by a mobile telecommunications terminal including a wireless Internet communications function, in which case the mobile telecommunications system includes a WAP gateway.

When a conventional general mobile telecommunications subscriber intends to access the user desired Internet server 13 via the user terminal 11, the following procedure is performed in most cases.

A dedicated button for performing a wireless Internet connection is set in a conventional user terminal enabling the wireless Internet connection. Thus, a user presses the dedicated button to boot a wireless Internet browser, shifts a curser from an initial menu to a menu such as a Book Mark, a Favorite or a direct Go, to select one of them and presses a confirmation button to select a URL (Universal Resources Locator) stored in a corresponding menu. The conventional wireless Internet connection method has problems that a user presses various buttons in the terminal in order to shift a cursor or to select a desired menu, and awaits whenever each menu is selected.

Meanwhile, there is a method that the user presses the dedicated button to boot a wireless Internet browser and then directly inputs a desired site URL to access a desired site. It is very burdensome to input a URL made up of alphabet by means of limited buttons in the user terminal. Since the point that it is difficult to input a wireless Internet site URL is not also desirable on the part of an Internet site administrator any more, it is necessary to solve the problem,

Also, in the prior art, the wireless Internet site administrator should advertise the site URL in order to induce terminal users to access his or her site. However, in the case that it is not so easy for users to recognize or memorize the URL, it is very difficult that the wireless Internet site administrator induces terminal users to access his or her site.

Meanwhile, in the conventional portable telecommunications terminal, there is a shortcut dialing method in which users do not press a telephone number of a desired called party one by one, the called party telephone number is stored in the terminal, and a shortcut button which has been matched with the called party telephone number is pressed to connect with the called party directly.

### SUMMARY OF THE INVENTION

To solve the above problems that it is difficult for a user to access a wireless Internet directly, and that it is difficult for a wireless Internet site administrator to secure an easily recognizable URL, it is an object of the present invention to provide a wireless Internet connection method using telephone numbers in which a user accesses a wireless Internet using a telephone number of a wireless Internet site administrator, and a connection method can be performed straightly using a shortcut dialing function possessed in a conventional terminal.

To accomplish the above object of the present invention, there is provided a wireless Internet connection method using combination of numbers, the method comprising the steps of: converting a numerical combination made of at least one number into an Internet site URL (Universal Resources Locator), matching a combination of at least one number with the Internet site URL to form a database; receiving the numerical combination from a user terminal using a shortcut button; searching a URL matching the received numerical combination; and connecting the user terminal with an Internet site having the URL.

It is preferable that the wireless Internet connection method according to the present invention uses the numerical combination as a telephone number of an Internet site administrator. Further, it is preferable that the numerical combination is input by a shortcut button in the user terminal so that the numerical combination does not need to input one by one.

Also, the method for matching the numerical combination to be input and stored by the shortcut button in the user terminal with the Internet site URL is accomplished by three methods. By the first method, a single character is matched with each number of 0 to 9. Then, a desired numerical combination of an Internet site administrator, that is, a number is modified into a combination of corresponding characters. Then, an Internet site having the character combination as a URL is produced to then link the corresponding numerical combination with the newly produced Internet site. The second method is a method for linking a desired numerical combination of the Internet site administrator with the Internet site URL run by the corresponding Internet site administrator. The third method is same as the second method, except that an Internet site to be linked is a sub-domain of a certain particular site.

The detailed description of the method for accessing the Internet site using the shortcut button and the numerical combination will follow.

The production of the desired numerical combination of the site administrator and the corresponding wireless Internet site URL is performed by a predetermined mapping table, in which the mapping table is included in a mobile telecommunications company system providing a wireless Internet connection service. In addition, since conversion of the numerical combination into the URL with reference to the mapping table is accomplished by adding a new step to an existing Internet site system, it is preferable that the conversion step is performed between the user terminal and the conventional wireless Internet connection device such as a WAP gateway.

### BRIEF DESCRIPTION OF THE DRAWINGS

The above object and other advantages of the present invention will become more apparent by describing the preferred embodiment thereof in more detail with reference to the accompanying drawings in which:
FIG. 1 shows a network of a general wireless Internet;
FIG. 2 is a flow chart view of a first embodiment of a wireless Internet shortcut connection method according to the present invention;
FIG. 3 is a view for explaining the first embodiment of the present invention shown in FIG. 2;
FIG. 4 is a flow chart view of a second embodiment of a wireless Internet shortcut connection method according to the present invention;
FIG. 5 is a view for explaining the second embodiment of the present invention shown in FIG. 4; and
FIG. 6 shows an example of a mapping table which is applied to a shortcut button use.

### DETAILED DESCRIPTION OF THE INVENTION

A wireless Internet connection service, that is, a wireless Internet connection method using a WAP according to a preferred embodiment of the present invention will be described in detail with reference to the accompanying drawings.

### First embodiment

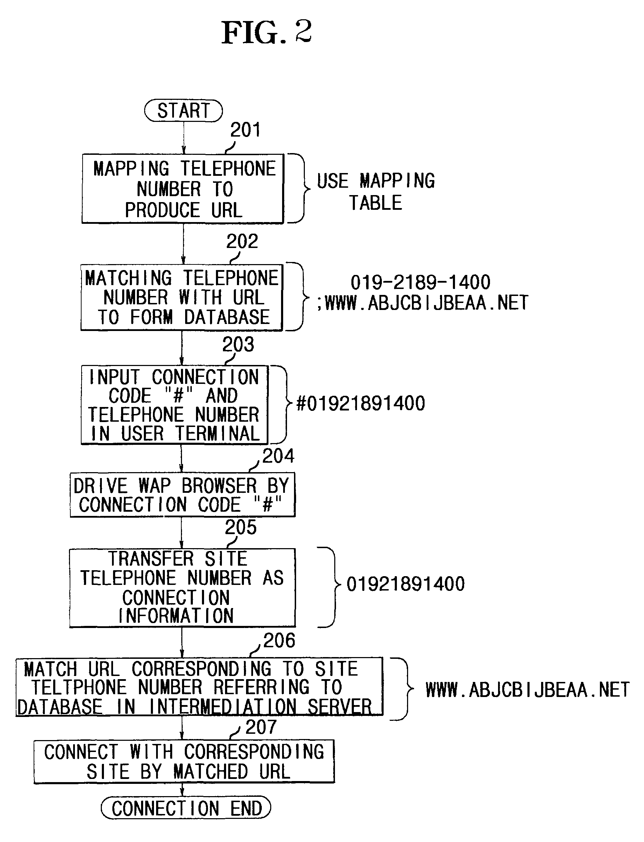

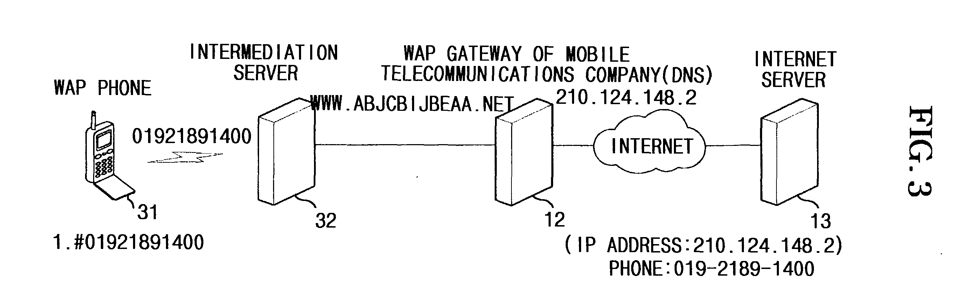

FIG. 2 is a flow chart view of a first embodiment of a wireless Internet shortcut connection method according to the present invention. FIG. 3 is a view for explaining the first embodiment of the present invention shown in FIG. 2.

In the first embodiment of the present invention, a wireless Internet site administrator registers his or her desired numerical combination, that is, a telephone number of the site administrator, a wireless Internet site URL corresponding to a numerical combination is newly produced and the newly produced URL is matched with the numerical combination. The production of URL using the numerical combination is accomplished by a predetermined mapping table as illustrated in the following Table 1, which method will be described in detail later.

The following Table 1 is an example of the mapping table in the first embodiment.

**Table 1**

| | | | | | | | | | | |
|---|---|---|---|---|---|---|---|---|---|---|
| Arabic number constituting numerical combination | 0 | 1 | 2 | 3 | 4 | 5 | 6 | 7 | 8 | 9 |
| English alphabet constituting site URL | A | B | c | D | E | f | g | h | i | j |

Referring to FIG. 2, the numerical combination selected by the site administrator is mapped using the mapping table of Table 1, to thereby produce a new URL (step 201). The mapping method will be described below in detail. The site administrator selects a desired numerical combination (number) and registers it on an intermediation server 32. It is preferable to use his or her telephone number as the numerical combination, but there is no limitation such as "2002", "2424" and "123456789". For example, if the site administrator selects his or her telephone number such as "019-2189-1400" as the numerical combination, the intermediation server 32 transforms the numbers constituting the telephone number into corresponding characters according to the mapping table of Table 1. The character combination obtained by transforming "019-2189-1400" according to the mapping table becomes "abjcbijbess", in which a domain classification code such as ".com", ".co.kr", ".net" and so on is appended to produce a URL. Here, since the present invention relates to a network, the wireless Internet site appended with ".net" will be described.

That is, the telephone number of "019-2189-1400" is converted into the wireless Internet site URL of "www.abjcbijbess.net" and the site administrator is assigned with the Internet site having the URL of "www.abjcbijbess.net".

The converted URL is matched with the telephone number of the corresponding site administrator and stored in a database of the intermediation server 32 (step 202).

In general, a domain name uses a word or a combination of words, which can be easily memorized by users. Therefore, the above-described domain is nothing but a string of characters without having any meaning and thus does not overlap the existing registered domains.

Also, in the Table 1, the numbers of 0 to 9 correspond to the characters of a to j, respectively, and they also can correspond to other characters other than the characters of a to j. Since other language domains can be used recently, the other language characters other than English can correspond to the numbers of 0 to 9. In the case that the Korean language is used, the Korean consonants can correspond to the numbers of 0 to 9, respectively.

The user inputs the site administrator's telephone number of "019-2189-1400" together with a predetermined connection code, for example, "#" in order to access a wireless Internet site, using a terminal 31 (step 203). Here, the connection code is a code for enabling the user terminal 31 to recognize the numbers following the connection code as connection information for the Internet site connection that is not a general telephone number.

Here, the connection code and the connection information that is the numerical combination are matched and stored in particular buttons such as shortcut buttons of the terminal 31. Thus, users do not need to input the connection code and the connection information one by one and presses a particular button one time to access the wireless Internet site, which will be descried in detail later.

The user terminal 31 recognizes the input connection code (#) and drives the WAP browser (step 204), and transfers the numerical combination following the connection code, that is, the telephone number, as the connection information for accessing the wireless Internet site (step 205). For this function, the user terminal 31 should be programmed so that steps 204 and 205 can be executed.

The intermediation server 32 having received the telephone number of the site administrator from the user terminal 31 searches a database and finds out the site URL matched with the corresponding telephone number mapped in step 202 (step 206).

The intermediation server 32 transfers the found URL, that is, "www.abjcbijbess.net" to a DNS (Domain Name Server) 12. The DNS 12 finds out the IP address (210.124.148.2) of "www.abjcbijbess.net", and connects with the Internet server 13 having the corresponding IP address.

As described above, in the first embodiment of the present invention using the mapping table, the site administrator as well as the user does not need to know the URL of his or her own Internet site.

The site administrator registers only a combination of his or her desired numbers, for example, a telephone number, in order to make his or her site URL an object of the wireless Internet connection service according to the first embodiment of the present invention. Then, a new URL corresponding to a corresponding number is produced and assigned in the intermediation server via the mapping table, to thereby enable the site administrator to run a site having the corresponding URL. Accordingly, if a user inputs a telephone number of the corresponding site administrator attached with the connection code such as a special symbol code #, the user can access the corresponding site, and can perform a telephone call with a corresponding site administrator by inputting only the telephone number.

### Second embodiment

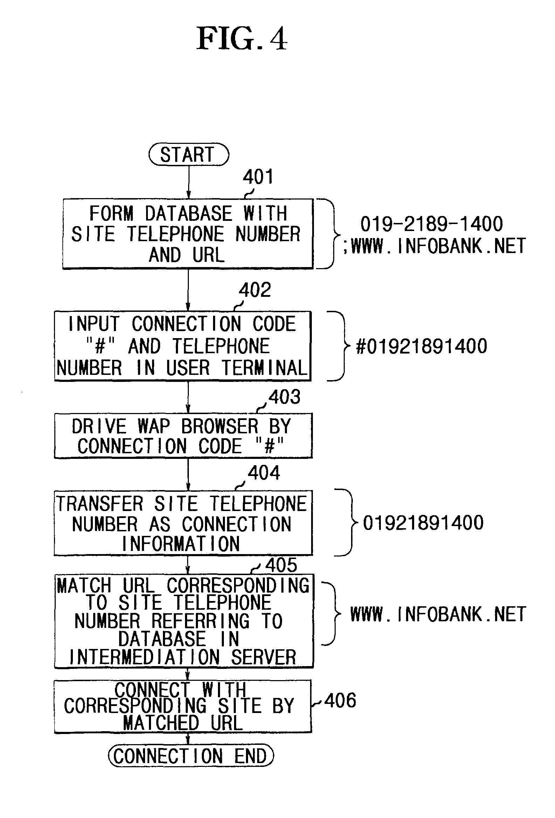

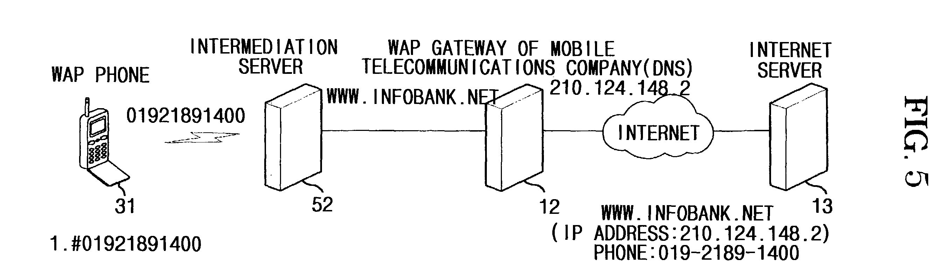

FIG. 4 is a flow chart view of a second embodiment of a wireless Internet shortcut connection method according to the present invention. FIG. 5 is a view for explaining the second embodiment of the present invention shown in FIG. 4.

In the second embodiment of the present invention, a wireless Internet site administrator links his or her desired numerical combination, that is, a telephone number of the site administrator, with the wireless Internet site administrator's desired site, for example, his or her running site. Here, the site has a uppermost URL such as ".com" and ".net".

If the wireless Internet site administrator registers a telephone number, the intermediation server 52 matches the registered telephone number with a desired site of the Internet site administrator to form a database (step 401).

As in the first embodiment, in the case that the telephone number of the site administrator is, for example, "019-2189-1400" and the site URL of the site administrator is "www.infobank.net", the telephone number of "019-2189-1400" is matched with the "www.infobank.net" to be stored in the database.

When a user inputs the telephone number of the site administrator together with a predetermined connection code such as "#" in order to access the Internet, via the user terminal 31 (step 402), and try an access to the site run by the site administrator, the terminal 31 drives the WAP browser by the connection code of "#" (step 403), and transfers the telephone number following the connection code as connection information (step 404).

The intermediation server 52 having received the telephone number of the site administrator from the user terminal 31 searches the site URL of "www.infobank.net" matched with the corresponding telephone number in the database (step 405). The found URL is transferred to the DNS 12. The DNS 12 finds out the IP address of the corresponding site and connects with the Internet server 13 having the corresponding IP address (step 406).

As described above, the intermediation server 52 in this embodiment plays a similar role of the DNS 12. That is, the general DNS converts a domain into an IP address and connects with an Internet server having the corresponding IP address. Meanwhile, the intermediation server 52 according to the present invention converts the numerical combination (number) to be input and transferred via the user terminal 31 before the DNS into a domain which is pre-matched and stored.

### Third embodiment

This embodiment is performed in the same manner as the second embodiment, in which a domain matched with a telephone number selected by a site administrator is to use as a sub-domain the telephone number selected by the site administrator.

That is, a URL linked with a telephone number is not an uppermost independent domain having an independent IP address as in the first and second embodiments, but is to use as a sub-domain the telephone number appended with a certain particular uppermost URL having the independent IP address. For example, if a telephone number of the site administrator is "019-2189-1400", a URL that is linked with the telephone number becomes "www.infobank.net/01921891400". The Internet server that is connected by the DNS 12 becomes the Internet server 13 having the URL of "www.infobank.net".

In the above embodiments of the present invention, the procedure of inputting the connection code such as "#" or "*" and the numerical combination in the user terminal 31 in the wireless Internet connection method according to the present invention can use a shortcut dialing function provided in the terminal conveniently. For example, a number one button "1" in the terminal 31 is stored in correspondence to "#01921891400", and then if a user presses the number one button "1" for a little long as a shortcut dialing function, the preset code and numbers are automatically dialed. The user terminal 31 in the present invention recognizes the connection code "#" at first and drives the wireless Internet browser. The user terminal 31 recognizes the following numerical combination as the connection information for accessing the wireless Internet site and recognizes the numerical combination as a general telephone number in the case that there is no connection code such as "#".

Also, the combination of the numbers used in the present invention can use any numbers such as "2002", "2000", "2424" and "123456789" as well as the telephone number.

In addition to the method for matching the numerical combination with a shortcut button in order to access the Internet site using a shortcut button, there are following various methods. In these cases, a corresponding Internet site can be accessed without passing through the intermediation server 32 or 52.

Firstly, the URL of an Internet site which is input and stored in the terminal 31 is matched with a particular shortcut button. For example, the connection code, such as "#" and the URL, such as "#www.infobank.net" are input using the input buttons in the terminal 31 and then matched with a particular shortcut button such as a number one button "1", to then store the matched number one button. If a user presses the number one button in the terminal 31 one time for little long, the terminal 31 recognizes the connection code "#" among the stored "#www.infobank.net" at first and activates the wireless Internet browser. Then, the URL of "www.infobank.net" following the connection code is recognized as the connection information, to thereby access the Internet site having the URL of "www.infobank.net".

Secondly, the IP address of the Internet site which is input and stored in the terminal 31 is matched with a particular shortcut button. In this case, it is necessary for the terminal 31 to recognize that the input information is an IP address. In general, if a URL is input, the terminal 31 is primarily accessed to the DNS in order to find out an IP address matched with the URL. Thus, if an IP address is input directly, a corresponding Internet site is accessed without passing through the DNS. Therefore, an IP address symbol code "*" following the connection code "#" is input and then an IP address such as "210.124.148.2" is input. Then, a pattern consisting of the connection code, the input IP address symbol code and the IP address in sequence is matched with a particular shortcut button and stored. That is, the pattern which has been matched with the shortcut button and stored becomes "#*210.124.148.2".

Here, in order to facilitate the input of the symbol "." included in the IP address, a button such as "*" that can replace "." is designated and used. In this case, the terminal 31 recognizes the symbol "*" as the IP address symbol code if the symbol "*" follows the connection code "#" and recognizes the symbol "*" as the symbol "." of the IP address if the symbol "*" follows the IP address symbol code. Using the above method, the pattern of the IP address which is matched with the shortcut button and stored becomes "#*210*124*148*2".

When a user wishes to access a corresponding Internet site, he or she has only to press a corresponding shortcut button one time for little long.

Finally, a URL of the Internet site is input using the mapping table.

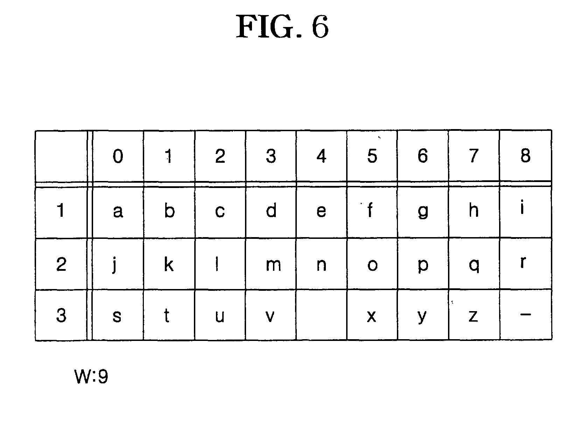

At first, a mapping table is made up. In the mapping table, alphabet and special symbols such as "-" forming a URL can correspond to numbers, respectively. Then, the URL is modified in the form of a numerical combination according to the mapping table. In the mapping table, since "www" is commonly used in the URL of the Internet site, it is preferable to assign the symbol "www" with a single number such as "9". An example of the mapping table is shown in FIG. 6. In the mapping table of FIG. 6, each alphabetical character is represented as two numbers as a matrix expression. That is, "a" is expressed as "01", "b" as "11", and "r" as "82". Here, the symbol "." included in the URL can be replaced by the symbol "*" as described above.

For example, in the case that the URL is "www.infobank.net", the URL is input as "#999*1842515211014221*424113" and matched with a particular shortcut button, based on the mapping table of FIG. 6.

The mapping table is provided to the user of the terminal 31 together with the manual of the terminal 31. The terminal 31 has decoding information with respect to the mapping table. Thus, if the numbers "999" are input following the connection code "#", the numbers following the "#" is URL displayed by the mapping table, in which "*" is recognized as "." included in the URL.

Also, the decoding information with respect to the mapping table can be stored in the intermediation server, to thereby use the stored mapping table. In this case, the terminal 31 does not perform extra the decoding work, and transfers the information following the connection code "#" to the intermediation server as the connection information. Here, the connection information should be notified to the intermediation server since the intermediation server should pass through a decoding process. For this purpose, a decoding code "#" is added before the connection information.

That is, in the case that the intermediation server performs a decoding work by the mapping table, the information matched with the shortcut button and then stored becomes "##999*1842515211014221*424113". If the intermediation server has received the connection information including the decoding code "#", the intermediation server converts the received connection code into the URL of "www.infobank.net" based on the mapping table of Fig. 6 and transfers it to the DNS.

As described above, the wireless Internet connection method according to the present invention solves the problems that it is difficult for a user to access a wireless Internet directly, and that it is difficult for a wireless Internet site administrator to secure an easily recognizable URL, in which a user accesses a wireless Internet using a telephone number of a wireless Internet site administrator, and a connection method can be performed straightly using a shortcut dialing function possessed in a conventional terminal.

## Claims

1. A wireless Internet connection method using combination of numbers in order to access an Internet site using a wireless Internet browser, the method comprising the steps of:
(a) converting a numerical combination made of at least one number into an Internet site URL (Universal Resources Locator);
(b) matching said numerical combination with said converted URL to thereby store the matched result;
(c) receiving said numerical combination from a user terminal;
(d) searching a URL matching said received numerical combination and connecting said user terminal with an Internet site having said URL.

2. The wireless Internet connection method of claim 1, wherein said step (a) comprises the sub-steps of:
(a1) making the at least one number correspond to at least one character using a mapping table;
(a2) converting said numerical combination into a combination of characters corresponding to each number constituting said numerical combination; and
(a3) adding a classifier of a domain to the character combination converted in sub-step (a2), to thereby produce a URL.

3. The wireless Internet connection method of claim 1, wherein said step (c) comprises the sub-steps of:
(c1) matching said numerical combination including at least one connection code with a particular button in said user terminal and storing the matched result in said user terminal;
(c2) pressing said particular button at user's end; and
(c3) activating the Internet browser in the user terminal and transferring said numerical combination as the connection information.

4. A wireless Internet connection method using combination of numbers in order to access an Internet site using a wireless Internet browser, the method comprising the steps of:
(a) matching a numerical combination made of at least one number with an Internet site URL (Universal Resources Locator) and storing the matched result;
(b) receiving said numerical combination from a user terminal;
(c) searching a URL matching the received numerical combination and connecting said user terminal with an Internet site having said URL.

5. The wireless Internet connection method of claim 4, wherein an Internet URL matched with said numerical combination is an uppermost URL having an independent IP address or a URL which has said numerical combination as a sub-domain in a certain uppermost URL.

6. The wireless Internet connection method of claim 1, wherein said numerical combination is a telephone number.

7. The wireless Internet connection method of claim 4, wherein said numerical combination is a telephone number.

8. The wireless Internet connection method of claim 4, wherein said step (b) comprises the sub-steps of:
(b1) matching said numerical combination including at least one connection code with a particular button in said user terminal and storing the matched result in said user terminal;
(b2) pressing the particular button at user's end; and
(b3) activating the Internet browser in the user terminal and transferring the numerical combination as the connection information.

9. The wireless Internet connection method of claim 3, wherein said connection code is to enable said user terminal to activate the Internet browser in said user terminal and transfer said numerical combination following said connection code as the connection information for the wireless Internet site connection.

10. The wireless Internet connection method of claim 7, wherein said connection code is to enable said user terminal to activate the Internet browser in said user terminal and transfer said numerical combination following said connection code as the connection information for the wireless Internet site connection.

11. The wireless Internet connection method of claim 9, wherein said connection code is a symbol "#" positioned on a button input portion of the user terminal.

12. The wireless Internet connection method of claim 10, wherein said connection code is a symbol "#" positioned on a button input portion of the user terminal.

13. A wireless Internet connection method using a shortcut button in order to access an Internet site using a wireless Internet browser, the method comprising the steps of:
(a) matching information for accessing Internet site with a particular button in a user terminal and storing the matched result in said user terminal;
(b) pressing the particular button one time at user's end; and
(c) activating an Internet browser in said user terminal and transferring connection information.

14. The wireless Internet connection method of claim 13, wherein said information for accessing the Internet site in step (a) comprises a connection code for enabling said user terminal to activate the Internet browser and the connection information for the Internet site to be accessed.

15. The wireless Internet connection method of claim 14, wherein said connection code is a symbol "#".

16. The wireless Internet connection method of claim 14, wherein said connection information is a URL of an Internet site.

17. The wireless Internet connection method of claim 14, wherein said connection information is an IP address of the Internet site.

18. The wireless Internet connection method of claim 14, wherein in the case of said connection information, the URL of the Internet site is expressed as the numerical combination, using a mapping table where an alphabetical character is matched with at least one number.

19. The wireless Internet connection method of claim 17, wherein a classifier expression symbol "." included in said IP address and said URL is replaced by a symbol "#".

20. The wireless Internet connection method of claim 18, wherein a classifier expression symbol "." included in said IP address and said URL is replaced by a symbol "#".

21. The wireless Internet connection method of claim 17, wherein said connection information further comprises an IP address expression symbol.

22. The wireless Internet connection method of claim 18, wherein said terminal recognizes a number representing a symbol "www" which is commonly used in an Internet site URL among the numbers converted by the mapping table, to thereby recognize that the connection information following said connection code is converted by the mapping table and decode the recognized result.

23. The wireless Internet connection method of claim 18, wherein the connection information converted by the mapping table is decoded in an intermediate server.

24. The wireless Internet connection method of claim 23, wherein said connection information further comprises a decoding code for instructing the intermediate server to convert the numerical combination converted by the mapping table into the Internet site URL again.
